# EUROPÄISCHE PATENTSCHRIFT

(11) **EP 2 613 961 B1**
(45) Veröffentlichungstag und Bekanntmachung des Hinweises auf die Patenterteilung: **10.10.2018**
(21) Anmeldenummer: 11757545.6
(22) Anmeldetag: 23.08.2011
(51) Int. Cl.: B60L 11/18, B60L 15/00, B60L 11/00, B62M 6/40, B62M 6/45, B62M 6/90, H02J 50/12, H02J 7/02

(54) **VORRICHTUNG ZUM BERÜHRUNGSLOSEN ÜBERTRAGEN VON ENERGIE AN EIN FAHRZEUG, FAHRZEUG UND VERWENDUNG EINER FELGE EINES FAHRZEUGES**
DEVICE FOR CONTACTLESS TRANSMISSION OF ENERGY TO A VEHICLE, VEHICLE AND USE OF A RIM OF A VEHICLE
DISPOSITIF POUR TRANSMETTRE SANS CONTACT DE L'ÉNERGIE À UN VÉHICULE, VÉHICULE APPROPRIÉ ET UTILISATION D'UNE JANTE D'UN VÉHICULE

(30) Priorität: 10.09.2010 DE 102010044977
(43) Veröffentlichungstag der Anmeldung: 17.07.2013
(73) Patentinhaber: Sew-Eurodrive GmbH & Co. KG, 76646 Bruchsal (DE)
(72) Erfinder: SCHMIDT, Josef, 76676 Graben-Neudorf (DE); SCHWESINGER, Klaus, 76646 Bruchsal (DE)
(86) Internationale Anmeldenummer: PCT/EP2011/004220
(87) Internationale Veröffentlichungsnummer: WO 2012/031686

(56) Entgegenhaltungen:
- EP-A1- 0 902 523
- FR-A1- 2 870 794
- US-A- 5 788 007
- US-A1- 2004 056 549

## Beschreibung

Die Erfindung betrifft ein System mit Vorrichtung zum berührungslosen Übertragen von Energie an ein Fahrzeug und Verwendung einer Felge eines Fahrzeuges.

Es ist allgemein bekannt, Fahrzeuge mit einem aus einem Energiespeicher versorgbaren Elektroantrieb auszustatten.

Aus der US 5 788 007 A ist ein auf einem Boden verfahrbares Fahrzeug, wie Elektrofahrrad, bekannt. Aus der FR 2 870 794 A1 ist ebenfalls ein auf einem Boden verfahrbares Fahrzeug bekannt.

Aus der EP 0 902 523 A1, die als nächstliegender Stand der Technik angesehen wird und die Präambel des unabhängigen Anspruchs 1 sowie die Präambel des unabhängigen Anspruchs 20 zeigt, ist ein von einer Primäranordnung, welche auf dem Boden aufgestellt ist, induktiv beladbares Elektrofahrzeug bekannt, das auf dem Boden verfahrbar ist.

Aus der US 2004/056549 A1 ist ein Motor-getriebenes Fahrrad bekannt.

Der Erfindung liegt daher die Aufgabe zugrunde, die Beladung von Elektrofahrzeugen weiterzubilden, insbesondere zu vereinfachen.

Erfindungsgemäß wird die Aufgabe bei dem System nach den in Anspruch 1 und bei der Verwendung nach den in Anspruch 20 angegebenen Merkmalen gelöst.

Von Vorteil ist dabei, dass ein Linearmotorisches Prinzip anwendbar ist als Antriebsmotor, wobei der Linearmotor auf dem Kreisumfang des Rades angeordnet ist. Insbesondere ist somit das Passivteil an der Felge eines Rades anbringbar. Der elektromotorische Antrieb muss nur geringe Kräfte erzeugen, um hohe Drehmomente zu bewirken. Denn der Radialabstand der Krafterzeugung ist sehr groß, da er auf dem Außendurchmesser des Rades angeordnet ist. Somit ist ein großes Antriebsdrehmoment erzeugbar. Außerdem ist zum Bremsen Energie rückgewinnbar und vom Motor in einem Energiespeicher rückspeisbar; beispielsweise bei einer abwärts gerichteten Fahrbewegung wird also Energie rückspeisbar.

Erfindungsgemäß weist das Passivteil in Umfangsrichtung regelmäßig voneinander beabstandete Dauermagnete, insbesondere in axialer Richtung abwechselnd magnetisierte Dauermagnete, oder Kurzschlussstäbe, insbesondere schwertähnlich ausgeführte, oder Pole auf. Von Vorteil ist dabei, dass verschiedene Antriebsprinzipien kombinierbar sind. Somit ist zwar ein kostengünstiger Asynchron-Linearmotor verwendbar; aber zur Erhöhung des Antriebsmoments bei Stillstand sind zusätzliche Dauermagnete im Passivteil, also an der Felge des Rades, vorsehbar.

Bei einer vorteilhaften Ausgestaltung ist am Außenumfangs des ringförmigen Teils ein Reifen, insbesondere aus gummiertem Material, angeordnet,
insbesondere wobei zwischen Reifen und ringförmigem Teil das Passivteil angeordnet ist. Von Vorteil ist dabei, dass das Passivteil durch den Reifen schützbar ist. Insbesondere weist die Felge eine Ringnut auf, in welcher der Reifen aufgenommen ist. Bei Anordnung des Passivteils am Nutboden, also Nutgrund, der Ringnut ist somit durch den Reifen einerseits und andererseits sogar bei Zerstörung des Reifens ein Schutz durch die Felge, insbesondere deren an den Nutgrund angrenzenden Nutwände, vorsehbar. Denn bei Zerstörung des Reifens berühren die an den Nutgrund angrenzenden Nutwände den Boden und das am Nutgrund, also in der Nut, angeordnete Passivteil bleibt geschützt.

Das Passivteil erhöht außerdem auch das Trägheitsmoment, wodurch ein ruhigeres und stabileres Laufverhalten des Fahrzeugs erreichbar ist.

Bei einer vorteilhaften Ausgestaltung ist das ringförmige Teil aus Metall, insbesondere Aluminium, gefertigt. Von Vorteil ist dabei, dass die Wirbelstromverluste gering haltbar sind. Bei Verwendung oder zumindest Beschichtung mit Kupfer oder anderen gut elektrisch leitfähigen Stoffen ist eine weitere Verringerung der Wirbelstromverluste erreichbar.

Bei einer vorteilhaften Ausgestaltung ist die Magnetisierungsrichtung der Dauermagnete des passiven Teils in axialer Richtung oder entgegen der axialen Richtung, also in oder entgegen der Normalenrichtung der durch das ringförmige Teil aufgespannten Ebene, gerichtet. Insbesondere sind in Umfangsrichtung nächstbenachbarte Dauermagnete entgegengesetzt magnetisiert. Von Vorteil ist dabei, dass ein Synchronlinearmotor-Antriebsprinzip realisierbar ist. Somit sind hohe Antriebsmomente auf kompaktem Bauraum auch bei Stillstand, also verschwindender Drehzahl, des Rades erzeugbar.

Bei einer vorteilhaften Ausgestaltung sind am Rahmen des Fahrzeugs zwei oder mehr, insbesondere zwischen drei und zwanzig, Spulenkerne mit darauf gewickelten Sekundärwicklungen angeordnet, die in Wirkverbindung stehen mit dem Passivteil, insbesondere mit dessen Dauermagneten, indem der wesentliche Anteil deren Magnetfelds durch einen jeweiligen Spulenkern leitbar ist. Von Vorteil ist dabei, dass je nach gewünschtem Antriebsmoment eine Anzahl von Spulenkernen anbringbar ist. Hierfür ist vorteiligerweise eine modulartige Bauweise anwendbar, so dass jedem Modul ein Spulenkern mit zugehöriger Wicklung zugeordnet ist und die Module in Umfangsrichtung am Umfang des Rades nebeneinander anreihbar sind. Vorzugswiese weisen die Module eine Schnittstelle zum gegenseitigen Verbinden und Durchleiten der elektrischen Ströme auf, insbesondere also einen Steckverbinder und eine mechanische Schnittstelle.

Bei einer vorteilhaften Ausgestaltung ist der elektromotorische Antrieb ein linearmotorischer Antrieb, insbesondere ein an einem Hinterrad des Fahrzeugs angeordneter und wirksamer. Von Vorteil ist dabei, dass am selben Rad oder an einem anderen Rad auch eine Vorrichtung zur berührungslosen Energieübertragung an den Energiespeicher vorsehbar sind, beispielsweise zum Aufladen des Energiespeichers aus einem stationär angeordneten elektrischen Einspeisung. Hierzu ist von einer im Boden anordenbaren Primärwicklung ein Wechselstrom in die Felge induzierbar, welcher in Umfangsrichtung oder entgegen der Umfangsrichtung fließt. Die am jeweiligen Spulenkern angeordnete Sekundärwicklung erhält somit eine induzierte Spannung und kann mittels des elektrisch mit den Sekundärwicklungen verbundenen Wechselrichters, der dann als Gleichrichter wirksam ist, den unipolar ausgeführten Energiespeicher aufladen.

Bei einer vorteilhaften Ausgestaltung wird das bestrombare Aktivteil aus einem Wechselrichter gespeist, welcher aus einem am Fahrzeug angeordneten Energiespeicher versorgt ist. Von Vorteil ist dabei, dass der Wechselrichter einen bidirektionalen Energiefluss ermöglicht und somit ein motorischer und ein generatorischer Betrieb ermöglicht ist, wobei dann die Spannungen an den dann als Statorwicklungen wirksamen Sekundärwicklungen nicht synchron verlaufen sondern bei dreiphasiger Auslegung beispielsweise 120° phasenverschoben zueinander sind. Alternativ, beispielsweise bei Stillstand des Rades, ist auch ein Aufladebetrieb ermöglicht, bei dem alle Sekundärwicklungen eine synchrone Induktionsspannung erfahren und der Wechselrichter als einer jeweiligen Sekundärwicklung zugeordneter Gleichrichter wirksam ist.

Bei einer vorteilhaften Ausgestaltung ist dem Energiespeicher, also dem ersten Energiespeicher, ein zweiter Energiespeicher zugeschaltet, der einen mindestens zehnmal größeren maximal zulässigen Ladestrom aufweist als der erste Enegiespeicher. Von Vorteil ist dabei, dass bei kurzzeitigem generatorischem Betrieb der zweite Energiespeicher den gesamten erzeugten Energiestrom aufnehmen kann und damit aufladbar ist und im nachfolgenden motorischen Betrieb wiederum entladbar ist.

Wichtige Merkmale der Erfindung ist auch, dass zusätzlich zum elektromotorischen Antrieb auch eine berührungslose Übertragung von Energie an ein Fahrzeug ermöglicht ist, dass ein Primärleiter induktiv gekoppelt zu einem ringförmigen Teil des Fahrzeugs anordenbar ist,
wobei das ringförmige Teil drehbar gelagert am Fahrzeug, insbesondere an dessen Rahmen, ist,
wobei am Fahrzeug eine Sekundärwicklung induktiv gekoppelt zu dem ringförmigen Teil angeordnet ist.

Von Vorteil ist dabei, dass der Sekundärwicklung Energie berührungslos übertragbar ist, wobei ein ringförmiges Teil, vorzugsweise also die Felge eines Rades des Fahrzeuges, verwendbar ist, um die Energie von einem bodenverlegten, also stationären, Primärleiter zur Sekundärwicklung zu übertragen. Dabei ist die Sekundärwicklung in weitem Abstand zum Primärleiter anordenbar, beispielsweise am ringförmigen Teil gegenüberstehend, also in einem Umfangswinkel von mehr als 90°, insbesondere 180°.

Bei einer vorteilhaften Ausgestaltung ist in Umfangsrichtung des ringförmigen Teils zwischen dem Bereich der induktiven Kopplung an den Primärleiter und dem Bereich der induktiven Kopplung an die Sekundärwicklung mehr als 90° Umfangswinkel vorgesehen. Von Vorteil ist dabei, dass große Abstände zwischen Primärleiter und Sekundärwicklung vorsehbar sind.

Bei einer vorteilhaften Ausgestaltung ist das ringförmige Teil die Felge eines Rades, insbesondere des Hinterrades, des Fahrzeugs. Von Vorteil ist dabei, dass die Felge zum Durchleiten von elektrischem Strom verwendbar ist und außerdem der effektiv wirksame Luftspalt bei geeignet ferromagnetischem Material reduzierbar ist.

Bei einer vorteilhaften Ausgestaltung ist der Primärleiter um einen Spulenkern gewickelt vorgesehen und/oder die Sekundärwicklung um einen Spulenkern gewickelt vorgesehen. Von Vorteil ist dabei, dass ein verbesserter Wirkungsgrad bei der Übertragung erreichbar ist.

Bei einer vorteilhaften Ausgestaltung ist der Spulenkern U-förmig. Von Vorteil ist dabei, dass in dem durch die Beabstandung der Schenkel des U entstehenden Zwischenraum das ringförmige Teil, welches drehbar gelagert ist am Fahrzeug, also auch relativ zum Spulenkern, der am Fahrzeug befestigt ist, in diesem Zwischenraum vorsehbar ist.

Bei einer vorteilhaften Ausgestaltung weisen die Schenkel des U an ihren zueinander zugewandten Seitenflächen jeweils Erhebungen auf. Von Vorteil ist dabei, dass der Fluss zentrierbar ist und somit die Streuverluste verringerbar sind.

Bei einer vorteilhaften Ausgestaltung bestehen das ringförmige Teil aus einem elektrisch leitfähigen und ferromagnetischem Material. Von Vorteil ist dabei, dass der Feldfluss zwischen den Erhebungen durch das ringförmige Teil führbar ist und somit der effektiv wirksame Luftspalte verringerbar ist. Auf diese Weise ist ein hoher Wirkungsgrad erreichbar bei der Übertragung der elektrischen Leistung. Insbesondere ist der primärseitige und sekundärseitige Spulenkern entsprechend ähnlich gestaltbar und auf diese Weise eine kostengünstigere Herstellung durch größere Stückzahlen ermöglicht. Aber auch bei unterschiedlicher Ausführung der primärseitigen und sekundärseitigen Spulenkerne ist vorzugsweise der Luftspalt zwischen den Erhebungen gleich groß.

Bei einer vorteilhaften Ausgestaltung ist das ringförmige Teil mittels einer Mulde im Zwischenbereich zwischen den Schenkeln des U, insbesondere zwischen den an den Schekeln vorgesehenen Erhebungen, positionierbar. Von Vorteil ist dabei, dass im Boden eine Mulde, also Vertiefung, vorsehbar ist, so dass eine Positionierung des Fahrzeugs in der zum optimalen Wirkungsgrad zugehörigen Position des Fahrzeugs einfach ermöglicht ist. In dieser Position ist dann die Felge, insbesondere das ringförmige Teil, zwischen den Erhebungen des primärseitigen Spulenkerns angeordnet und ein hoher Wirkungsgrad erreichbar.

Bei einer vorteilhaften Ausgestaltung weist das Fahrzeug zumindest ein Rad auf, welches das ringförmige Teil aufweist. Von Vorteil ist dabei, dass beispielsweise das Hinterrad eines Fahrrades oder dergleichen das ringförmige Teil, wie Felge oder dergleichen, aufweist. Besonders einfach ist die Erfindung bei Speichenrädern anwendbar, da die Speichen zwar auch elektrisch leitfähig sind, aber mit einem elektrischen Übergangswiderstand mit der Felge verbindbar sind. Insbesondere ist sogar ein Isolator zwischenschaltbar, wie beispielsweise eine Kunststoffkappe zum Abdecken der in die Felge eingreifenden Spitzen der Speichen. Indem also ein elektrisches Isoliermittel zwischengeschaltet wird, ist einen weitere Reduktion der Verluste erreichbar.

Bei einer vorteilhaften Ausgestaltung ist das ringförmige Teil derart dünnwandig, dass seine Wandstärke in zu den Schenkeln paralleler Richtung kleiner als ein Fünftel, insbesondere kleiner als ein Zehntel, der Wandstärke in Achsrichtung des das ringförmige Teil umfassenden Rades des Fahrzeugs ist, insbesondere also in Verbindungsrichtung der Schenkel, insbesondere in Verbindungrichtung der Erhebungen. Von Vorteil ist dabei, dass Wirbelstromverluste reduziert sind.

Bei einer vorteilhaften Ausgestaltung ist die Felge mittels Speichen an einer am Fahrzeug, insbesondere am Rahmen des Fahrzeugs, drehbar gelagerten Nabe gehalten. Von Vorteil ist dabei, dass der Anteil der in die Speichen abfließenden Ströme relativ zum in der Felge in Umfangsrichtung fließenden Stromes gering ist. Somit ist ein hoher Wirkungsgrad erreichbar.

Bei einer vorteilhaften Ausgestaltung weist die Vorrichtung eine im Boden angeordnete derartige Mulde auf und der Primärleiter samt Spulenkern ist derart angeordnet, so dass bei Positionieren eines das ringförmige Teil aufweisenden Rades des Fahrzeuges in der Mulde die stärkste induktive Kopplung zwischen den Primärleiter und dem ringförmigen Teil erreicht wird. Von Vorteil ist dabei, dass das Fahrzeug automatisch oder mit nur geringer Fahrhilfe eingeparkt wird in die optimale Position. Ein Freischalten des Antriebs nach Erreichen der Mulde ist zum Erreichen der optimalen Position vorteilhaft.

Bei einer vorteilhaften Ausgestaltung weist die Vorrichtung eine im Boden angeordnete derartige Mulde auf und der Primärleiter ist um einen derartige angeordneten und ausgeführten Spulenkern mit Schenkeln gewickelt angeordnet, so dass bei Positionieren eines das ringförmige Teil aufweisenden Rades des Fahrzeuges in der Mulde der effektiv wirksame Luftspalt zwischen den Schenkeln reduziert wird mittels des ringförmigen Teils,
insbesondere wobei das Teil ferromagnetisch ist. Von Vorteil ist dabei, dass der Hauptfluss verbessert geführt ist und der Wirkungsgrad erhöht ist.

Bei einer vorteilhaften Ausgestaltung ist das ringförmige Teil zweistückig ausgeführt, indem ein ferromagnetischer Ring mit einer ringförmigen und/oder kreisförmigen elektrischen Leiterschleife, insbesondere Kupferleitung, verbunden ist. Von Vorteil ist dabei, dass eine einerseits der induzierte elektrische Strom in einfacher Weise geführt ist und gleichzeitig ein hoher Wirkungsgrad durch Verringerung der Streuverluste erreichbar ist.

Wichtige Merkmale bei dem Fahrzeug sind, dass es mit einem drehbar gelagerten ringförmigen Teil ausgestattet ist, wobei es insbesondere mit einem beladbaren Energiespeicher vorgesehen ist,
insbesondere für die Verwendung in einer Vorrichtung nach mindestens einem der vorangegangenen Ansprüche,
wobei am Fahrzeug, insbesondere am Rahmen des Fahrzeugs, eine Sekundärwicklung angeordnet ist, die induktiv gekoppelt ist mit dem ringförmigen Teil,
wobei das ringförmige Teil ferromagnetisch und elektrisch leitfähig ist, insbesondere wobei das ringförmige Teil aus einem ferromagnetischen Ring mit einer ringförmigen und/oder kreisförmigen elektrischen Leiterschleife, insbesondere Kupferleitung, zusammengesetzt ist.

Von Vorteil ist dabei, dass das Fahrzeug über das ringförmige Teil, also beispielsweise ein in einem Rad des Fahrzeuges vorgesehene Felge, einerseits nahe am Boden Energie aufnehmen und trotzdem die Sekundärwicklung weit vom Boden entfernt anordenbar ist. Somit ist die Sekundärwicklung geschützt vor wesentlicher Verschmutzung und dergleichen anbringbar. Zum Beladen muss der Bodenabstand der Sekundärwicklung nicht variiert werden.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

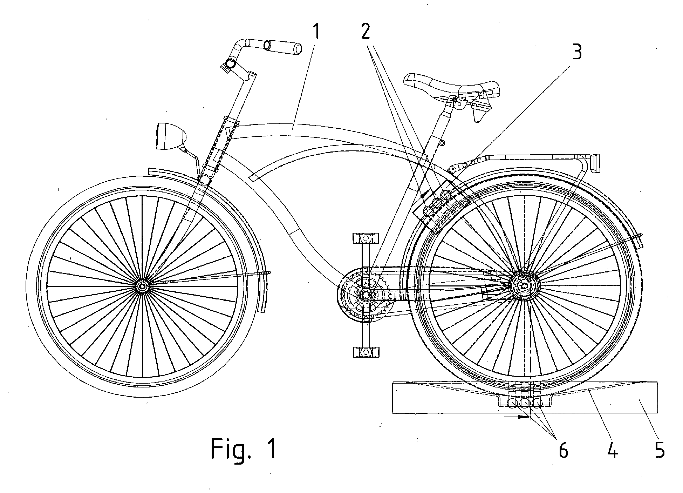

In der Figur 1 ist ein Fahrzeug als erstes erfindungsgemäßes Ausführungsbeispiel in Seitenansicht gezeigt, wobei teilweise angeschnitten dargestellt wurde. Dabei ist eine Energiequelle 6 und ein Aufnahmeeinrichtung 3 gezeigt.
In Figur 2 ist ein Schnitt durch einen Teilbereich der Energiequelle 6 gezeigt.
In Figur 3 ist ein Schnitt durch einen Teilbereich der Aufnahmeeinrichtung 3 gezeigt.

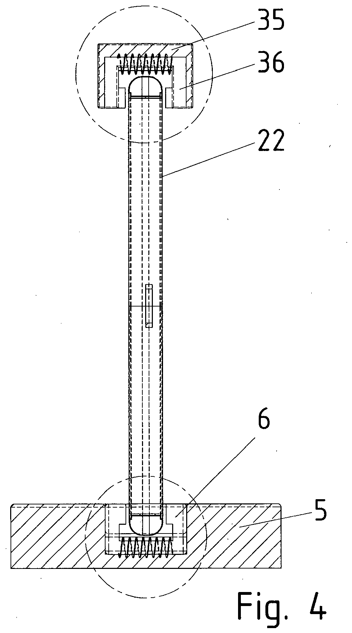

In der Figur 4 ist das berührungslose Energieübertragungssystem für das Fahrzeug näher dargestellt.
In der Figur 5 ist ein Fahrzeug, insbesondere Zweirad, wie Fahrrad, mit elektromotorischem Antriebssystem gezeigt.
In der Figur 6 ist ein Ausschnitt des Antriebssystems in Schnittansicht vergrößert dargestellt.
In der Figur 7 ist ein Ausschnitt des Antriebssystems zur Verdeutlichung des Antriebsprinzips in Draufsicht näher gezeigt.

Das Fahrzeug ist beispielsweise ein Zweirad und weist elektrische Verbraucher auf, wie beispielsweise elektrisch betreibbare Leuchtmittel, Lampen oder einen Elektromotor als elektrischen Antriebsmotor.

Diese elektrischen Verbraucher sind aus einem Energiespeicher, wie Ultracap, Kondensator, Batterie oder Akkumulator, versorgbar.

Über ein erfindungsgemäßes Ladesystem ist dem Energiespeicher berührungslos Energie zuführbar. Hierzu ist am Rahmen 1 des Fahrzeugs, insbesondere Zweirades, insbesondere Fahrrades, ein Aufnahmeeinrichtung 3 befestigt, welches eine Sekundärwicklung 2 aufweist.

Zum Beladen ist das Fahrzeug derart geparkt, dass das Hinterrad in einer Mulde 4 im Boden abgestellt ist. Dabei ist im Bodenmaterial eine Energiequelle 6 angeordnet, die eine Primärleiterwicklung aufweist. In den Primärleiter 23 wird ein mittelfrequenter Strom eingeprägt von einer Einspeisevorrichtung, wobei vorzugswiese eine Frequenz zwischen 10 und 500 kHz verwendet wird.

Das Hinterrad weist eine Felge 21 auf, die aus elektrisch leitfähigem Material, insbesondere Aluminium oder einem Stahl, gefertigt ist. Außerdem ist die Felge 21 hohl ausgeführt. Die Felge 21 als ringförmiges Teil am Umfang des Hinterrades vorgesehen.

Die Felge 21 ist zwar mittels Speichen 20 an der Nabe vorgesehen, jedoch ist die elektrische Verbindung zwischen Speichen 20 und Felge 21 schlecht ausgeführt. Vorzugsweise wird zur weiteren Vergrößerung des elektrischen Übergangswiderstandes ein zusätzliches Isoliermittel zwischengeordnet.
Die Felge 21 trägt an ihrem äußeren Umfang einen Reifen 22, der vorzugsweise aus gummiertem Material oder einem sonstigen Kunststoff besteht.

Mittels der im Boden angeordneten Primärleiterwicklung 23 beziehungsweise Primärleitung 23, insbesondere Primärwicklung, wird ein wechselndes Magnetfeld in dem Spulenkern 6 erzeugt, das durch die Erhebung 31 am Spulenkern in den Luftspalt geleitet wird, der zur benachbarten Erhebung 31 des Spulenkerns 6 führt. Der Spulenkern ist mit Ausnahme der Erhebungen 31 U-förmig. Die Erhebungen sind an der dem jeweils anderen Schenkel des Spulenkerns zugewandten Seite des Schenkels angeordnet.

Bei geeigneter Parkposition, also insbesondere Abstellen des Hinterrades im Tiefpunkt der Mulde, ist die Felge im Innenbereich des U-förmigen Spulenkerns 6 und/oder im Luftspalt zwischen den Erhebungen des U-förmigen Spulenkerns 6 angeordnet. Die Felge als elektrischer Leiter ist somit induktiv gekoppelt mit einer Sekundärwicklung 33.

Auf diese Weise ist im Hinterrad, insbesondere in der in Umfangsrichtung des Hinterrades ringförmig ausgeführten elektrisch leitfähigen Felge 21, ein Strom induziert, der somit in Umfangsrichtung beziehungsweise entgegen der Umfangsrichtung in der Felge 21 fließt.

Am Rahmen des Fahrzeugs ist eine Aufnahmeeinrichtung 3 angeordnet, welche eine Sekundärwicklung 33 aufweist, die um einen Spulenkern 36 herum gewickelt vorgesehen ist. Der Spulenkern 36 ist vorzugsweise U-förmig oder zumindest im Wesentlichen U-förmig ausgeführt und von einem Gehäuse 35 des Aufnahmeteils umgeben.

An den Innenseiten der Schenkel des U-förmigen Spulenkerns, also an der dem jeweiligen anderen Schenkel zugewandten Seite eines Schenkels des U sind Erhebungen 31 vorgesehen, um den Luftspalt zu verringern und die Feldführung zu verbessern - wie auch bei den Erhebungen des Spulenkerns 6.

Die Felge als elektrischer Leiter ist induktiv gekoppelt mit einer Sekundärwicklung 33. Die Felge 21 ist vorzugsweise aus ferromagnetischem Material. Hierdurch lässt sich der Luftspalt für das von der Primärleiterwicklung 23 erzeugte magnetische Hauptfeld verringern und somit die induktive Kopplung zwischen Primärleiterwicklung und Felge verstärken. Dadurch steigt auch der Wirkungsgrad.

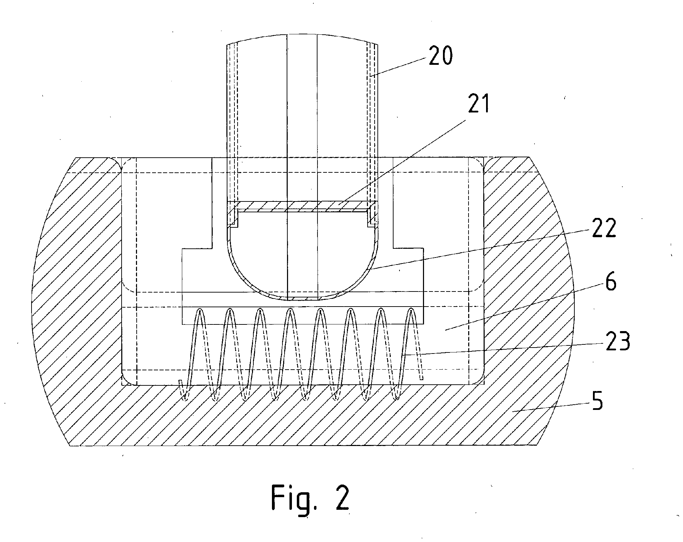

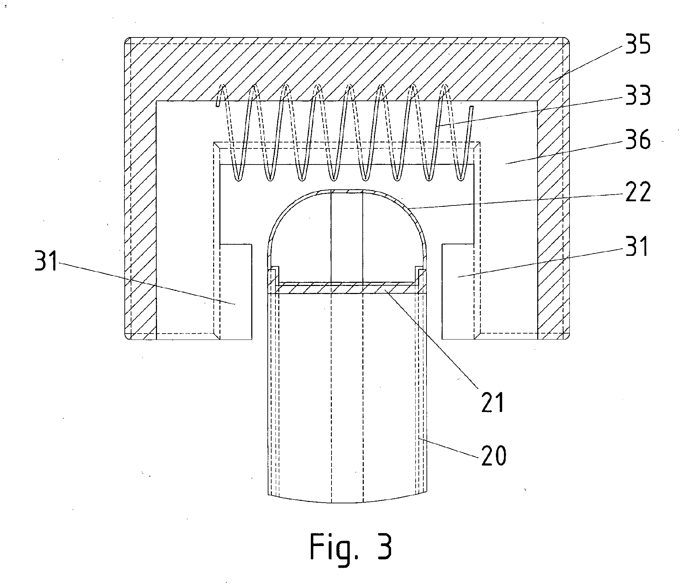

Vorzugsweise ist die Felge 21 im Zwischenbereich zwischen den Erhebungen 31 nach Figur 3 und auch zwischen den Erhebungen des Spulenkerns 6 nach Figur 2 angeordnet. Somit ist ein Optimum erreicht, insbesondere da dann das ferromagnetische und elektrisch leitfähige Felgenmaterial im Beriech der kürzesten Verbindungswege der jeweiligen Erhebungen angeordnet ist.

Durch die dünnwandige Ausführung der Felge ist auch das Auftreten von Wirbelstromverlusten reduziert. Hierzu ist die Wandstärke der Felge kleiner als 7 Millimeter, insbesondere kleiner als 4 Millimeter, gewählt.

Der in Umfangsrichtung am Hinterrad in der Felge fließende Wechselstrom induziert in der Sekundärwicklung 33 eine Spannung, so dass ausgangsseitig ein Wechselstrom zur Verfügung gestellt ist.

Zur Beladung des Energiespeichers wird der Wechselstrom gleichgerichtet. Aus dem Energiespeicher und/oder aus dem Aufnahmeteil sind die anderen Verbraucher, insbesondere auch ein als Antrieb des Fahrzeugs fungierender Elektromotor, versorgbar.

Der Sekundärwicklung ist eine Kapazität derart in Reihe oder parallel zugeschaltet, dass die zugehörige Resonanzfrequenz im Wesentlichen der Frequenz des Wechselstroms im Primärleiter zur Energieversorgung entspricht. Auf diese Weise ist ein hoher Wirkungsgrad erreichbar.

Zusätzlich zur für die Energieversorgung vorgesehenen Wechselstrom ist auch ein zusätzlicher höher frequenter Wechselstromanteil aufmodulierbar, so dass Daten übertragbar sind. Vorzugsweise werden hierbei Frequenzen ab 100 kHz oder ab 500 kHz verwendet, wobei die Frequenz stets höher gewählt wird als die für die Energieversorgung, also Leistungsversorgung, gewählte Frequenz. Aus der Sekundärwicklung 33 beziehungsweise aus dem mittels Sekundärwicklung 33 und der Kapazität gebildeten Schwingkreis ist eine Ladeelektronik des Fahrzeugs versorgbar, die zumindest einen Gleichrichter aufweist. Vorzugsweise weist die Ladeelektronik auch einen Regler auf, der den Energiespeicher stromgeregelt auflädt, solange die gespeicherte Energiemenge unterhalb eines kritischen Wertes ist, und nach Überschreiten des kritischen Wertes spannungsgeregelt.

Die Felge ist aus derartigem Material und derart geformt, dass auch eine Übertragung solch hoher Frequenzen verlustarm ausführbar ist. Hierzu ist vorzugsweise eloxiertes Aluminium gewählt.

Auf diese Weise sind also Daten austauschbar. Insbesondere sind somit Daten zur Identifikation des Fahrzeugs übertragbar, so dass das Fahrzeug von der Einspeisevorrichtung identifizierbar ist und daraufhin die elektrische Leistung freigebbar ist. Mittels der Identifikationsdaten ist eine Rechnungserstellung und Rechnungsübermittelung zur Abrechnung der ans Fahrzeug gelieferten Energiemenge ausführbar.

Außerdem ist vor Freigeben der elektrischen Leistung zur Energieversorgung mittels des Datenübertragungskanals zunächst erst einmal das Vorhandensein des Fahrzeugs detektierbar. Hierzu wird mittels Einprägung eines Testsignals in den Primärleiter 23 und Erfassung der entsprechenden Strom- und Spannungsverläufe eine Bestimmung der Induktivität der Primärleiterwicklung 23 ausgeführt. Wenn sich nun die Induktivität bei Einparken des Fahrzeugs um einen kritischen Betrag ändert, wird dies als Erkennung eines Fahrzeugs ausgewertet.

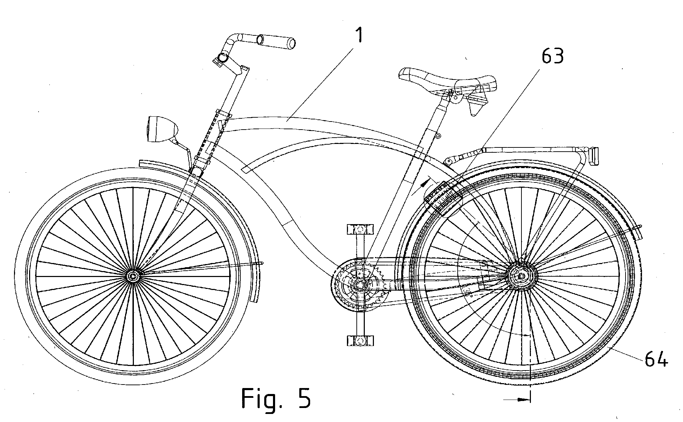

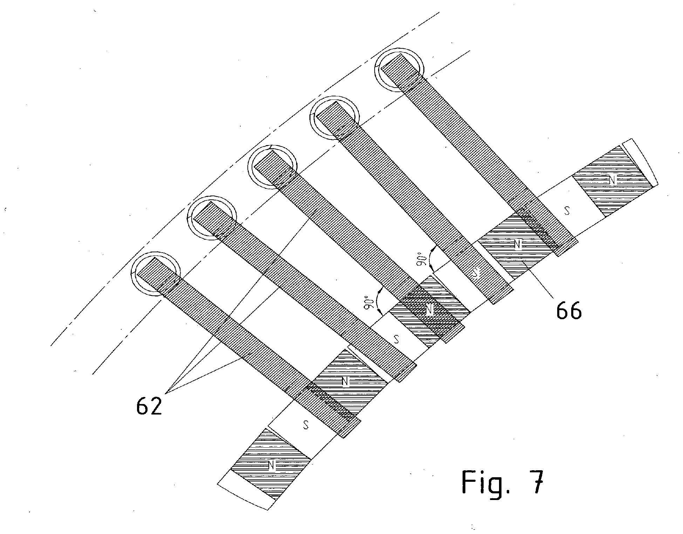

In Figur 5, 6 und 7 ist der Antriebsmotor, also Elektromotor des Fahrzeugs näher dargestellt. Dabei ist wiederum mit dem Rahmen 1 des Fahrzeuges eine Sekundärwicklung 61, die auf einem Spulenkern 62 angeordnet ist, verbunden. Der Spulenkern ist im Wesentlichen U-förmig ausgeprägt. Dabei sind aber an den einander zugewandten Innenflächen der Schenkel des U Erhebungen ausgebildet um einen möglichst geringen Luftabstand zum Rad des Fahrzeugs entstehen zu lassen.

Dabei ist das Rad wiederum über ein Lager drehbar gelagert am Fahrzeug und weist einen Reifen 64 auf, der von einer Felge 66 getragen wird. Die Felge 66 ist mittels Speichen an einer Nabe gehalten.

Der Spulenkern 62 ist entweder aus Ferritmaterial oder aus einem Stahl-Blechpaket gebildet. 63 Halteteil, insbesondere aus Aluminium

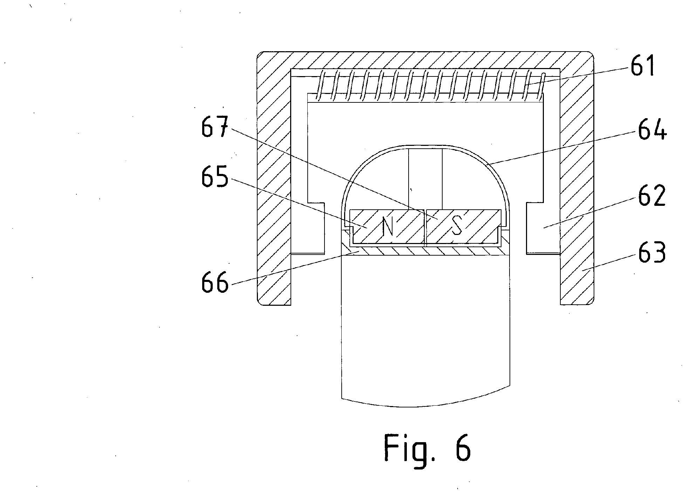

In Umfangsrichtung sind an der Felge 66 regelmäßig Dauermagnete angeordnet, die in axialer Richtung magnetisiert sind. In Figur 6 ist erkennbar, dass die Dauermagnete jeweils zweistückig ausgebildet sind, also als ein axial vorne angeordneter, erster Dauermagnet 65 und ein axial hinten angeordneter, zweiter Dauermagnet 67. Somit ist axial vorne an dieser Magnetanordnung ein Nordpol und hinten ein Südpol ausgebildet. Die in Umfangsrichtung nächstbenachbarte Magnetanordnung ist in umgekehrter Richtung magnetisiert, aber ansonsten gleichartig aufgebaut.

Statt der zweistückigen Ausführung der jeweiligen Magnetanordnung ist auch eine einstückige Ausführung ermöglicht. Beispielsweise ist jede Magnetanordnung als in axialer Richtung ausgedehnter Stabmagnet ausführbar oder es sind Magnetplatten verwendbar.

Die Ausdehnung des U-förmigen Spulenkerns in Umfangsrichtung ist kleiner als der Mitten-Abstand einer Magnetanordnung zur nächstbenachbarten in Umfangsrichtung. Somit wird bei Drehbewegung des Rades eine möglichst große Änderung des Magnetfeldes im Spulenkern bewirkt und somit auch eine möglichst große Spannung induziert in der Sekundärwicklung.

In Umfangsrichtung sind fünf Spulenkerne 62 angeordnet, die jeweils eine Sekundärwicklung 61 aufweisen. In weiteren Ausführungsbeispielen sind auch zwei bis zehn oder mehr solcher Spulenkerne 62 mit Sekundärwicklung anordenbar.

Der Mitten-Abstand zwischen den Spulenkernen, also die Periodenlänge der regelmäßigen Anordnung der Spulenkerne in Umfangsrichtung ist etwas größer als der Mitten-Abstand einer Magnetanordnung zur in Umfangsrichtung nächstbenachbarten.

Somit sind die Sekundärwicklungen entsprechend den Statorwicklungen eines Linear-Synchronmotors bestrombar. Also wird ein motorischer Betrieb durch Einprägen eines Wechselstroms in die Sekundärwicklung ermöglicht.

Bei weiteren erfindungsgemäßen Ausführungsbeispielen wird statt des Synchronmotors ein Asynchronmotor oder ein Reluktanzmotor oder ein kombiniertes Prinzip angewendet. Dabei ist auf der Felge bei Ausführung als Asynchronmotor eine Anordnung von Kurzschlussstäben und bei Ausführung als Reluktanzmotor eine Anordnung von magnetisch wirksamen Polen vorgesehen. Allgemein gesprochen stellen die Sekundärwicklungen 61 mit den Spulenkernen 62 das Aktivteil dar und das Passivteil, also beispielsweise Kurzschlussstab, Polanordnung oder Dauermagnete, ist am Umfang der Felge angeordnet. Somit ist das Trägheitsmoment des Rades insgesamt zwar erhöht, aber dadurch auch ein stabilerer Lauf des Rades bewirkt.

Zur Speisung der Sekundärwicklungen ist ein Wechselrichter am Fahrzeug angeordnet, der aus einem Energiespeicher, wie Akkumulator, Batterie, Brennstoffzelle oder dergleichen, gespeist ist. Der Energiespeicher darf zusätzlich auch einen Doppelschichtkondensator, wie Ultracap oder dergleichen, aufweisen. Somit umfasst der Energiespeicher einen Energiespeicherteil, dem ein hoher Energiestrom kurzzeitig zuführbar ist, insbesondere ein mindestens zehnmal höherer Energiestrom als dem restlichen Energiespeicher, wie Akkumulator oder Batterie.

Beim Bremsen ist generatorisch Energie erzeugbar durch die Antriebsanordnung, wodurch dem Energiespeicher, insbesondere dessen Doppelschichtkondensator, Energie zuführbar ist.

### Bezugszeichenliste

- 1: Rahmen des Fahrzeugs, insbesondere Zweirades, insbesondere Fahrrades
- 2: Sekundärwicklung
- 3: Aufnahmeeinrichtung
- 4: Mulde
- 5: Bodenmaterial
- 6: Energiequelle, insbesondere Primärleiterwicklung
- 20: Speiche
- 21: Felge
- 22: Reifen
- 23: Primärleitung, insbesondere Primärwicklung
- 31: Erhebung am Spulenkern
- 33: Sekundärwicklung
- 35: Gehäuse
- 36: Spulenkern
- 61: Sekundärwicklung
- 62: Spulenkern, insbesondere Ferrit oder Blechpaket
- 63: Halteteil, insbesondere aus Aluminium
- 64: Reifen
- 65: erster Dauermagnet
- 66: Felge
- 67: zweiter Dauermagnet

## Patentansprüche

1. System, umfassend ein Elektrofahrzeug mit einer Vorrichtung zum berührungslosen Übertragen von Energie an das Elektrofahrzeug,
wobei das Elektrofahrzeug mit einem elektromotorischen Antrieb ausgeführt ist, der zumindest einen bestrombaren Aktivteil und einen dazu in Wirkverbindung angeordnetes Passivteil umfasst,
eine ringförmige Felge (21, 66), die drehbar am Rahmen (1) des Elektrofahrzeugs gelagert ist,
**dadurch gekennzeichnet, dass** das Passivteil an der radial äußeren Oberfläche der ringförmigen Felge (21,66) angeordnet ist, wobei ein linearmotorisches Prinzip als Antriebsmotor anwendbar und der Linearmotor auf dem Kreisumfang des Rades angeordnet ist,
wobei ein im Boden angeordneter Primärleiter (23) der Vorrichtung induktiv gekoppelt zur ringförmigen Felge (21,66) des Elektrofahrzeugs anordenbar ist,
wobei am Elektrofahrzeug eine Sekundärwicklung (2, 33, 61) induktiv gekoppelt zur ringförmigen Felge (21,66) angeordnet ist,
wobei das bestrombare Aktivteil aus einem Wechselrichter gespeist wird, welcher aus einem am Elektrofahrzeug angeordneten ersten Energiespeicher versorgt ist,
wobei der Wechselrichter einen bidirektionalen Energiefluss ermöglicht und somit ein motorischer und generatorischer Betrieb ermöglicht ist,
wobei dem ersten Energiespeicher, ein zweiter Energiespeicher zugeschaltet ist, der einen mindestens zehnmal größeren maximal zulässigen Ladestrom aufweist als der erste Enegiespeicher,
wobei bei kurzzeitigem generatorischem Betrieb der zweite Energiespeicher den gesamten erzeugten Energiestrom aufnehmen kann und damit aufladbar ist und im nachfolgenden motorischen Betrieb wiederum entladbar ist,
wobei das Passivteil in Umfangsrichtung regelmäßig voneinander beabstandete, in axialer Richtung abwechselnd magnetisierte Dauermagnete (65, 67), oder schwertähnlich ausgeführte Kurzschlussstäbe oder Pole aufweist,
wobei zwischen Reifen (22, 64) und ringförmiger Felge (21,66) das Passivteil angeordnet ist,
wobei die Vorrichtung eine im Boden angeordnete derartige Mulde (4) aufweist und der Primärleiter (23) samt Spulenkern (36, 62) derart angeordnet ist, so dass bei Positionieren eines die ringförmige Felge (21,66) aufweisenden Rades des Elektrofahrzeuges in der Mulde (4) die stärkste induktive Kopplung zwischen den Primärleiter (23) und der ringförmigen Felge (21,66) erreicht wird,
wobei die Vorrichtung die im Boden angeordnete derartige Mulde (4) aufweist und der Primärleiter (23) um einen derartig angeordneten und ausgeführten Spulenkern (36, 62) mit Schenkeln gewickelt angeordnet ist, so dass bei Positionieren eines die ringförmige Felge (21,66) aufweisenden Rades des Elektrofahrzeugs in der Mulde (4) der effektiv wirksame Luftspalt zwischen den Schenkeln reduziert wird mittels der ringförmigen Felge (21,66), die ferromagnetisch ist.

2. System nach Anspruch 1,
**dadurch gekennzeichnet, dass**
am Außenumfangs der ringförmigen Felge (21,66) ein Reifen (22, 64), insbesondere aus gummiertem Material, angeordnet ist.

3. System nach mindestens einem der vorangegangenen Ansprüche,
**dadurch gekennzeichnet, dass** die ringförmige Felge (21,66) aus Metall, insbesondere Aluminium, gefertigt ist.

4. System nach mindestens einem der vorangegangenen Ansprüche,
**dadurch gekennzeichnet, dass**
die Magnetisierungsrichtung der Dauermagnete (65, 67) des Passivteils in axialer Richtung oder entgegen der axialen Richtung, also in oder entgegen der Normalenrichtung der durch die ringförmige Felge (21,66) aufgespannten Ebene, gerichtet ist.

5. System nach mindestens einem der vorangegangenen Ansprüche,
**dadurch gekennzeichnet, dass**
in Umfangsrichtung nächstbenachbarte Dauermagnete (65, 67) entgegengesetzt magnetisiert sind.

6. System nach mindestens einem der vorangegangenen Ansprüche,
**dadurch gekennzeichnet, dass**
am Rahmen (1) des Elektrofahrzeugs zwei oder mehr, insbesondere zwischen drei und zwanzig, Spulenkerne (36, 62) mit darauf gewickelten Sekundärwicklungen (2, 33, 61) angeordnet sind, die in Wirkverbindung stehen mit dem Passivteil, insbesondere mit dessen Dauermagneten (65, 67), indem der wesentliche Anteil deren Magnetfelds durch einen jeweiligen Spulenkern (36, 62) leitbar ist.

7. System nach mindestens einem der vorangegangenen Ansprüche,
**dadurch gekennzeichnet, dass**
der elektromotorische Antrieb ein an einem Hinterrad des Fahrzeugs angeordneter und wirksamer linearmotorischer Antrieb ist.

8. System nach mindestens einem der vorangegangenen Ansprüche,
**dadurch gekennzeichnet, dass**
in Umfangsrichtung der ringförmigen Felge (21,66) zwischen dem Bereich der induktiven Kopplung an den Primärleiter (23) und dem Bereich der induktiven Kopplung an die Sekundärwicklung (2, 33, 61) mehr als 90° Umfangswinkel vorgesehen ist.

9. System nach mindestens einem der vorangegangenen Ansprüche,
**dadurch gekennzeichnet, dass**
die ringförmige Felge (21, 66) eine Felge (21,66) eines Hinterrades, des Elektrofahrzeugs ist.

10. System nach mindestens einem der vorangegangenen Ansprüche,
**dadurch gekennzeichnet, dass**
der Primärleiter (23) um einen Spulenkern (36, 62) gewickelt vorgesehen ist, und/oder dass die Sekundärwicklung (2, 33, 61) um einen Spulenkern (36, 62) gewickelt vorgesehen ist,

11. System nach mindestens einem der vorangegangenen Ansprüche,
**dadurch gekennzeichnet, dass**
der Spulenkern (36, 62) U-förmig ist.

12. System nach mindestens einem der vorangegangenen Ansprüche,
**dadurch gekennzeichnet, dass**
die Schenkel des U an ihren zueinander zugewandten Seitenflächen jeweils Erhebungen aufweisen.

13. System nach mindestens einem der vorangegangenen Ansprüche,
**dadurch gekennzeichnet, dass**
die ringförmige Felge (21,66) aus einem elektrisch leitfähigen und ferromagnetischem Material bestehen.

14. System nach mindestens einem der vorangegangenen Ansprüche,
**dadurch gekennzeichnet, dass**
die ringförmige Felge (21,66) mittels einer Mulde (4) im Zwischenbereich zwischen den Schenkeln des U , insbesondere zwischen den an den Schekeln vorgesehenen Erhebungen (31), positionierbar ist.

15. System nach mindestens einem der vorangegangenen Ansprüche,
**dadurch gekennzeichnet, dass**
das Elektrofahrzeug zumindest ein Rad aufweist, das die ringförmige Felge (21,66) aufweist.

16. System nach mindestens einem der vorangegangenen Ansprüche,
**dadurch gekennzeichnet, dass**
die ringförmige Felge (21,66) derart dünnwandig ist, dass seine Wandstärke in zu den Schenkeln paralleler Richtung kleiner als ein Fünftel, insbesondere kleiner als ein Zehntel, der Wandstärke in Achsrichtung des die ringförmige Felge (21,66) umfassenden Rades des Elektrofahrzeugs ist, insbesondere also in Verbindungsrichtung der Schenkel, insbesondere in Verbindungrichtung der Erhebungen (31).

17. System nach mindestens einem der vorangegangenen Ansprüche,
**dadurch gekennzeichnet, dass**
die ringförmige Felge (21, 66) mittels Speichen an einer am Elektrofahrzeug, insbesondere am Rahmen (1) des Elektrofahrzeugs, drehbar gelagerten Nabe gehalten ist.

18. System nach mindestens einem der vorangegangenen Ansprüche,
**dadurch gekennzeichnet, dass**
die ringförmige Felge (21,66) zweistückig ausgeführt ist, indem ein ferromagnetischer Ring mit einer ringförmigen und/oder kreisförmigen elektrischen Leiterschleife, insbesondere Kupferleitung, verbunden ist.

19. System nach mindestens einem der vorangegangenen Ansprüche,
**dadurch gekennzeichnet, dass**
am Rahmen (1) des Elektrofahrzeugs, eine Sekundärwicklung (2, 33, 61) angeordnet ist, die induktiv gekoppelt ist mit der ringförmigen Felge (21,66)
wobei die ringförmige Felge (21,66) ferromagnetisch und elektrisch leitfähig ist, insbesondere wobei die ringförmige Felge (21,66) aus einem ferromagnetischen Ring mit einer ringförmigen und/oder kreisförmigen elektrischen Leiterschleife, insbesondere Kupferleitung, zusammengesetzt ist.

20. Verwendung einer Felge (21, 66) eines Elektrofahrzeuges als Aufnahmeteil für ein Passivteil eines elektromotorischen Antriebs des Elektrofahrzeugs und zum Durchleiten von elektrischem Ladestrom bei der berührungslosen, insbesondere induktiven, Beladung eines Energiespeichers des Elektrofahrzeugs aus einem bodenverlegten Primärleiter (23) mit dem System nach einem der Ansprüche 1 bis 19.

## Claims

1. A system, comprising an electric vehicle with a device for contactless transmission of energy to the electric vehicle,
wherein the electric vehicle is embodied with an electric-motor drive which comprises at least one active part through which current can be passed and a passive part arranged in an operative connection therewith,
an annular rim (21, 66) which is mounted rotatably on the frame (1) of the electric vehicle,
**characterised in that** the passive part is arranged on the radially outer surface of the annular rim (21, 66), wherein a linear-motor principle can be used as a drive motor and the linear motor is arranged on the circular periphery of the wheel,
wherein a primary conductor (23), arranged in the ground, of the device can be arranged in inductively coupled manner relative to the annular rim (21, 66) of the electric vehicle,
wherein a secondary winding (2, 33, 61) is arranged on the electric vehicle in inductively coupled manner relative to the annular rim (21, 66),
wherein the active part through which current can be passed is fed from an inverter which is supplied from a first energy store arranged on the electric vehicle,
wherein the inverter permits a bidirectional flow of energy
and thus operation as a motor and as a generator is made possible,
wherein a second energy store is connected to the first energy store, which second store has an at least ten times greater maximum permissible charging current than the first energy store,
wherein in the case of short-term operation as a generator the second energy store can receive the entire energy current generated and can be charged therewith and can be discharged again in the subsequent operation as a motor,
wherein the passive part has permanent magnets (65, 67) which are regularly spaced apart from each other in the peripheral direction and are alternately magnetised in the axial direction, or short-circuit rods or poles embodied in a manner similar to blades,
wherein the passive part is arranged between the tyre (22, 64) and the annular rim (21, 66),
wherein the device has such a depression (4) arranged in the ground and the primary conductor (23) plus coil core (36, 62) is arranged in such a way so that upon positioning a wheel of the electric vehicle which bears the annular rim (21, 66) in the depression (4) the strongest inductive coupling between the primary conductor (23) and the annular rim (21, 66) is achieved,
wherein the device has the such a depression (4) arranged in the ground and the primary conductor (23) is arranged wound about a coil core (36, 62) which is arranged and embodied in such a way with legs, so that upon positioning a wheel of the electric vehicle which has the annular rim (21, 66) in the depression (4) the effectively effective air gap between the legs is reduced by means of the annular rim (21, 66), which is ferromagnetic.

2. A system according to Claim 1,
**characterised in that**
a tyre (22, 64), in particular made of rubberised material, is arranged on the outer periphery of the annular rim (21, 66).

3. A system according to at least one of the preceding claims,
**characterised in that**
the annular rim (21, 66) is manufactured from metal, in particular aluminium.

4. A system according to at least one of the preceding claims,
**characterised in that**
the direction of magnetisation of the permanent magnets (65, 67) of the passive part is directed in the axial direction or counter to the axial direction, i.e. in or counter to the normal direction of the plane spanned by the annular rim (21, 66).

5. A system according to at least one of the preceding claims,
**characterised in that**
permanent magnets (65, 67) which are next adjacent in the peripheral direction are inversely magnetised.

6. A system according to at least one of the preceding claims,
**characterised in that**
two or more, in particular between three and twenty, coil cores (36, 62) with secondary windings (2, 33, 61) wound thereon are arranged on the frame (1) of the electric vehicle, which cores are in operative connection with the passive part, in particular with the permanent magnets (65, 67) thereof, **in that** the essential portion of the magnetic field thereof can be guided through a respective coil core (36, 62).

7. A system according to at least one of the preceding claims,
**characterised in that**
the electric-motor drive is a linear-motor drive which is arranged and effective on a rear wheel of the vehicle.

8. A system according to at least one of the preceding claims,
**characterised in that**
more than 90° angle at circumference is provided in the peripheral direction of the annular rim (21, 66) between the region of the inductive coupling to the primary conductor (23) and the region of the inductive coupling to the secondary winding (2, 33, 61).

9. A system according to at least one of the preceding claims,
**characterised in that**
the annular rim (21, 66) is a rim (21, 66) of a rear wheel of the electric vehicle.

10. A system according to at least one of the preceding claims,
**characterised in that**
the primary conductor (23) is provided wound around a coil core (36, 62),
and/or **in that**
the secondary winding (2, 33, 61) is provided wound around a coil core (36, 62).

11. A system according to at least one of the preceding claims,
**characterised in that**
the coil core (36, 62) is U-shaped.

12. A system according to at least one of the preceding claims,
**characterised in that**
the legs of the U have elevations in each case on their facing side faces.

13. A system according to at least one of the preceding claims,
**characterised in that**
the annular rim (21, 66) consist [sic] of an electrically conductive and ferromagnetic material.

14. A system according to at least one of the preceding claims,
**characterised in that**
the annular rim (21, 66) can be positioned by means of a depression (4) in the intermediate region between the legs of the U, in particular between the elevations (31) provided on the legs.

15. A system according to at least one of the preceding claims,
**characterised in that**
the electric vehicle has at least one wheel which bears the annular rim (21, 66).

16. A system according to at least one of the preceding claims,
**characterised in that**
the annular rim (21, 66) is so thin-walled that its wall thickness in the direction parallel to the legs is less than one fifth, in particular less than one tenth, of the wall thickness in the axial direction of the wheel of the electric vehicle which comprises the annular rim (21,66),
in particular therefore in the connecting direction of the legs, in particular in the connecting direction of the elevations (31).

17. A system according to at least one of the preceding claims,
**characterised in that**
the annular rim (21, 66) is held by means of spokes on a hub rotatably mounted on the electric vehicle, in particular on the frame (1) of the electric vehicle.

18. A system according to at least one of the preceding claims,
**characterised in that**
the annular rim (21, 66) is embodied in two pieces, **in that** a ferromagnetic ring is connected to an annular and/or circular electrical conductor loop, in particular copper cable.

19. A system according to at least one of the preceding claims,
**characterised in that**
a secondary winding (2, 33, 61) is arranged on the frame (1) of the electric vehicle, which winding is inductively coupled with the annular rim (21, 66),
the annular rim (21, 66) being ferromagnetic and electrically conductive, in particular with
the annular rim (21, 66) being assembled from a ferromagnetic ring with an annular and/or circular electrical conductor loop, in particular copper cable.

20. Use of a rim (21, 66) of an electric vehicle as a receiving part for a passive part of an electric-motor drive of the electric vehicle and for passing through electric charging current upon the contactless, in particular inductive, charging of an energy store of the electric vehicle from a buried primary conductor (23) with the system according to one of Claims 1 to 19.

## Revendications

1. Système, comprenant
un véhicule électrique avec un dispositif pour transmettre sans contact de l'énergie au véhicule électrique,
sachant que le véhicule électrique est réalisé avec un entraînement à moteur électrique qui comprend au moins une partie active pouvant être mise sous tension électrique et une partie passive disposée en liaison fonctionnelle avec celle-ci,
une jante annulaire (21, 66), qui est montée à rotation sur le cadre (1) du véhicule électrique,
**caractérisé en ce que** la partie passive est disposée sur la surface radialement extérieure de la jante annulaire (21, 66), sachant qu'un principe de moteur linéaire peut être utilisé comme moteur d'entraînement et que le moteur linéaire et disposé sur la circonférence de la roue,
sachant qu'un conducteur primaire (23) du dispositif, disposé dans le sol, peut être disposé en étant couplé par induction à la jante annulaire (21, 66) du véhicule électrique, sachant qu'un bobinage secondaire (2, 33, 61) est disposé sur le véhicule électrique en étant couplé par induction à la jante annulaire (21, 66),
sachant que la partie active pouvant être mise sous tension électrique est alimentée à partir d'un convertisseur, qui est approvisionné à partir d'un premier accumulateur d'énergie disposé sur le véhicule électrique,
sachant que le convertisseur permet un flux d'énergie bidirectionnel et permet ainsi un fonctionnement comme moteur et un fonctionnement comme générateur,
sachant qu'un deuxième accumulateur d'énergie, qui présente un courant de charge maximal admissible au moins dix fois supérieur au premier accumulateur d'énergie, est mis en circuit avec le premier accumulateur d'énergie,
sachant qu'en fonctionnement de courte durée comme générateur, le deuxième accumulateur d'énergie peut absorber la totalité du flux d'énergie produit et peut ainsi être chargé, et il peut être déchargé dans le fonctionnement consécutif comme moteur, sachant que la partie passive présente des aimants permanents (65, 67) régulièrement espacés les uns des autres en direction périphérique, alternativement magnétisés en direction axiale, ou des barres de court-circuit réalisées ensiformes, ou des pôles,
sachant que la partie passive est disposée entre le pneumatique (22, 64) et la jante annulaire (21, 66),
sachant que le dispositif présente une cuvette (4) disposée dans le sol de telle sorte, et le conducteur primaire (23) y compris le noyau de bobine (36, 62) est disposé de telle sorte, que lors du positionnement d'une roue du véhicule électrique présentant la jante annulaire (21, 66) dans la cuvette (4), on obtient le couplage par induction maximal entre le conducteur primaire (23) et la jante annulaire (21, 66),
sachant que le dispositif présente la cuvette (4) disposée dans le sol de telle sorte, et le conducteur primaire (23) est disposé en étant enroulé autour d'un noyau de bobine (36, 62) ayant des branches qui est réalisé et disposé de telle sorte, que lors du positionnement d'une roue du véhicule électrique présentant la jante annulaire (21, 66) dans la cuvette (4), l'entrefer effectivement actif entre les branches est réduit au moyen de la jante annulaire (21, 66), qui est ferromagnétique.

2. Système selon la revendication 1, **caractérisé en ce qu'**un pneumatique (22, 64), en particulier en matériau caoutchouté, est disposé sur la périphérie extérieure de la jante annulaire (21, 66).

3. Système selon au moins une des revendications précédentes, **caractérisé en ce que** la jante annulaire (21, 66) est réalisée en métal, en particulier en aluminium.

4. Système selon au moins une des revendications précédentes, **caractérisé en ce que** la direction de magnétisation des aimants permanents (65, 67) de la partie passive est orientée en direction axiale ou à l'encontre de la direction axiale, donc dans la direction ou à l'encontre de la direction de la normale au plan sous-tendu par la jante annulaire (21, 66).

5. Système selon au moins une des revendications précédentes, **caractérisé en ce que** des aimants permanents (65, 67) immédiatement voisins en direction périphérique sont magnétisés en opposition.

6. Système selon au moins une des revendications précédentes, **caractérisé en ce que** deux noyaux de bobine (36, 62) ou davantage, en particulier entre trois et vingt, avec des bobinages secondaires (2, 33, 61) enroulés sur eux, sont disposés sur le cadre (1) du véhicule électrique, lesquels se trouvent en liaison fonctionnelle avec la partie passive, en particulier avec ses aimants permanents (65, 67), par le fait que la part principale de leurs champs magnétiques peut être dirigée à travers un noyau de bobine respectif (36, 62).

7. Système selon au moins une des revendications précédentes, **caractérisé en ce que** l'entraînement à moteur électrique est un entraînement à moteur linéaire disposé et actif sur une roue arrière du véhicule.

8. Système selon au moins une des revendications précédentes, **caractérisé en ce que** plus de 90° d'angle inscrit est prévu dans la direction périphérique de la jante annulaire (21, 66) entre la région du couplage par induction au conducteur primaire (23) et la région du couplage par induction au bobinage secondaire (2, 33, 61).

9. Système selon au moins une des revendications précédentes, **caractérisé en ce que** la jante annulaire (21, 66) est une jante (21, 66) d'une roue arrière du véhicule électrique.

10. Système selon au moins une des revendications précédentes, **caractérisé en ce que** le conducteur primaire (23) est prévu enroulé autour d'un noyau de bobine (36, 62),
et/ou **en ce que** le bobinage secondaire (2, 33, 61) est prévu enroulé autour d'un noyau de bobine (36, 62).

11. Système selon au moins une des revendications précédentes, **caractérisé en ce que** le noyau de bobine (36, 62) est en forme de U.

12. Système selon au moins une des revendications précédentes, **caractérisé en ce que** les branches du U présentent respectivement des bossages sur leurs faces latérales tournées l'une vers l'autre.

13. Système selon au moins une des revendications précédentes, **caractérisé en ce que** la jante annulaire (21, 66) est constituée d'un matériau électriquement conducteur et ferromagnétique.

14. Système selon au moins une des revendications précédentes, **caractérisé en ce que** la jante annulaire (21, 66) peut, au moyen d'une cuvette (4), être positionnée dans la région intermédiaire entre les branches du U, en particulier entre les bossages (31) prévus sur les branches.

15. Système selon au moins une des revendications précédentes, **caractérisé en ce que** le véhicule électrique présente au moins une roue qui présente la jante annulaire (21, 66).

16. Système selon au moins une des revendications précédentes, **caractérisé en ce que** la jante annulaire (21, 66) est à paroi mince de telle sorte que son épaisseur de paroi en direction parallèle aux branches est inférieure à un cinquième, en particulier à un dixième, de l'épaisseur de paroi dans la direction axiale de la roue du véhicule électrique comprenant la jante annulaire (21, 66), en particulier donc dans la direction de liaison des branches, en particulier dans la direction de liaison des bossages (31).

17. Système selon au moins une des revendications précédentes, **caractérisé en ce que** la jante annulaire (21, 66) est maintenue au moyen de rayons sur un moyeu monté à rotation sur le véhicule électrique, en particulier sur le cadre (1) du véhicule électrique.

18. Système selon au moins une des revendications précédentes, **caractérisé en ce que** la jante annulaire (21, 66) est réalisée en deux parties, par le fait qu'une bague ferromagnétique est assemblée à une boucle de conducteur électrique annulaire et/ou circulaire, en particulier une ligne de cuivre.

19. Système selon au moins une des revendications précédentes, **caractérisé en ce qu'**un bobinage secondaire (2, 33, 61), qui est couplé par induction à la jante annulaire (21, 66), est disposé sur le cadre (1) du véhicule électrique,
sachant que la jante annulaire (21, 66) est ferromagnétique et électriquement conductrice, sachant en particulier que la jante annulaire (21, 66) est composée d'une bague ferromagnétique avec une boucle de conducteur électrique annulaire et/ou circulaire, en particulier une ligne de cuivre.

20. Utilisation d'une jante (21, 66) d'un véhicule électrique comme élément récepteur pour une partie passive d'un entraînement à moteur électrique du véhicule électrique et pour faire passer du courant de charge électrique lors du chargement sans contact, en particulier par induction, d'un accumulateur d'énergie du véhicule électrique à partir d'un conducteur primaire (23) posé au sol avec le système selon l'une des revendications 1 à 19.
